# EUROPEAN PATENT SPECIFICATION

(11) **EP 3 026 079 B1**
(45) Date of publication and mention of the grant of the patent: **08.04.2020**
(21) Application number: 14829050.5
(22) Date of filing: 22.07.2014
(51) Int. Cl.: C08L 7/00, C08K 5/04, C08K 5/18, C08K 5/3445, F16F 1/36, F16F 15/08, C08K 5/00, C08K 5/20, C08K 5/372, C08K 5/378

(54) **ANTI-VIBRATION RUBBER COMPOSITION AND ANTI-VIBRATION RUBBER**
SCHWINGUNGSDÄMPFENDE KAUTSCHUKZUSAMMENSETZUNG UND SCHWINGUNGSDÄMPFENDES KAUTSCHUK
COMPOSITION DE CAOUTCHOUC ANTI-VIBRATION, ET CAOUTCHOUC ANTI-VIBRATION

(30) Priority: 26.07.2013 JP 2013155146
(43) Date of publication of application: 01.06.2016
(73) Proprietor: Bridgestone Corporation, Tokyo 104-8340 (JP)
(72) Inventor: NISHIMURA, Keiji, Yokohama-shi Kanagawa 244-8510 (JP)
(74) Representative: Marks & Clerk Incorporating Edward Evans Barker
(86) International application number: PCT/JP2014/069280
(87) International publication number: WO 2015/012247

(56) References cited:
- JP-A- S 649 250
- JP-A- S5 066 544
- JP-A- 2001 181 458
- JP-A- 2007 154 178
- US-A- 3 979 358
- US-A1- 2007 112 136
- DATABASE CA [Online] CHEMICAL ABSTRACTS SERVICE, COLUMBUS, OHIO, US; 12 May 1984 (1984-05-12), CHOI, JAE WOON ET AL: "A study on the vulcanization characteristics of combined antioxidants in NR and SBR compounds", XP002758463, retrieved from STN Database accession no. 1984:140587
- JAE WOON CHOI, KI JONG LEE: "A study on the vulcanization characteristic of combined antioxidants in NR and SBR compounds", JOURNAL OF THE KOREAN INSTITUTE OF RUBBER INDUSTRY, vol. 17, no. 2, 1 January 1982 (1982-01-01), pages 77-90, XP009509922, Republic of Korea ISSN: 0253-3138

## Description

### Technical Field

The present invention relates to a rubber composition for producing an anti-vibration rubber which is excellent in both durability and damping properties, and an anti-vibration rubber obtained by using the same.

### Background Art

Up to date, for enhancing the comfortability of a passenger, various anti-vibration materials have been disposed at the sites of vibration and noise sources in various vehicles such as automobiles in an attempt to reduce the intrusion of vibration and noise into the cabin. For example, for an engine, which is the main source of vibration and noise, an anti-vibration rubber is used for its constituent members such as a torsional damper, engine mount and muffler hanger, and thus absorbs the vibration caused at the time of engine driving to suppress the intrusion of vibration and noise into a cabin and the noise diffusion to the surrounding environment.

Basic properties required for such an anti-vibration rubber are strength properties for supporting a heavy weight article such as an engine and anti-vibration performance for absorbing and controlling the vibration. Further, when used under a high temperature environment such as an engine room, the anti-vibration rubber is expected to, needless to say, have good strength properties along with low dynamic magnification and good anti-vibration performance, and additionally have high durability and heat resistance.

A known method for imparting heat resistance involves using EPDM, which has good heat resistance, as a rubber component and adding a hindered amine compound to the rubber composition for further enhancing heat resistance (see Patent Literature 1, Examples). US3979358 relates to heat resistant rubbery polymer compositions. US2007/112136 relates to rubber compositions comprising ethylene-alpha-olefin-unconjugated diene copolymer, natural rubber, an organic peroxide and an aromatic amine. "A study on the vulcanization characteristics of combined antioxidants in NR and SBR compounds", Choi, Jae Woon et al. 12 May 1984, XP002758463 relates to effects of mixed antioxidants on vulcanization and vulcanizate properties for natural rubber and SBR.

### Prior Art Literature

### Patent Literature

Patent Literature 1: JP A 2006-199900, Examples

### Summary of Invention

### Problems to be solved by the Invention

However, the anti-vibration rubber which uses EPDM as described in the above Patent Literature 1 is not sufficient in the aspects of durability and damping properties. Generally, for the production of an anti-vibration rubber with good durability, a highly durable natural rubber is usually used. On the other hand, when a synthetic rubber such as styrene-butadiene rubber (SBR) or butyl rubber is added to a natural rubber for enhancing damping properties, good durability against large deformation and breaking strength of the natural rubber may be lost. Alternatively, a reinforcing material such as a carbon may be concentratedly filled for enhancing damping properties, but when a large amount of a reinforcing material is added, a rubber consequently has a high modulus of elasticity, making it difficult to apply for a case where low elasticity is required to an anti-vibration rubber member.

The present invention was studied in view of the above circumstances, and an object thereof is to provide a rubber composition for producing an anti-vibration rubber which is excellent in both damping properties and durability. Another object of the present invention is to provide an anti-vibration rubber obtained by using such a rubber composition.

### Means for Solving the Problems

The above objects are accomplished by an anti-vibration rubber composition comprising a rubber component comprising a natural rubber, and antioxidants, wherein the anti-vibration rubber composition comprises a compound having a carbon-carbon double bond at a terminal and a carbonyl group at an α position thereof (antioxidant A) and an imidazole antioxidant (antioxidant B) as the antioxidants.

When the antioxidant A having a carbon-carbon double bond is used, an anti-vibration rubber with outstanding durability and damping properties can be obtained. The reason for this is unclear but it is presumably caused by the reaction of the carbon-carbon double bond in the antioxidant A with the rubber component. Further, when an imidazole antioxidant is additionally used in combination with the antioxidant A, damping properties can further be enhanced by the synergistic effects with the antioxidant A.

The anti-vibration rubber composition of the present invention is as follows.
(1) The compound having a carbon-carbon double bond at a terminal and a carbonyl group at an α position thereof is a compound represented by the following general formula (I) 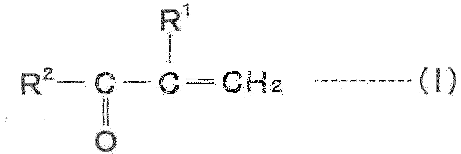 wherein,
   R¹ is a hydrogen atom or a methyl group,
   R² is a group having an aromatic amino group.
(2) R² is a group represented by R⁴-R³-; R³ is selected from the group consisting of a single bond, substituted or unsubstituted alkylene groups having 1 to 5 carbon atoms, and substituted or unsubstituted oxyalkylene groups having 1 to 5 carbon atoms in which an oxygen atom of the oxyalkylene group binds to a carbon atom of the carbonyl group); and R⁴ is selected from the group consisting of diphenylamino group, 1-naphthylamino group, 2-naphthylamino group, anilino group, ditolylamino group and p-(phenylamino)anilino group.
(3) Preferably, the imidazole antioxidant is selected from the group consisting of 2-mercaptobenzimidazole or a salt thereof and 2-mercaptomethylbenzimidazole or a salt thereof.
(4) The content of the compound having a double bond at a terminal and a carbonyl group at an α position thereof is 0.2 to 13 parts by mass based on 100 parts by mass of the rubber component.
(5) The content of the imidazole antioxidant is 0.1 to 10 parts by mass based on 100 parts by mass of the rubber component.
(6) Preferably, the rubber component further comprises a diene-based synthetic rubber, and a mass ratio of the natural rubber to the diene-based synthetic rubber (natural rubber/diene-based synthetic rubber) is 99/1 to 50/50. The use of a diene-based synthetic rubber together with a natural rubber further enhances the damping properties while maintaining a high level of durability.

The above object may also be accomplished by the anti-vibration rubber obtained by using the above anti-vibration rubber composition.

### Effects of invention

According to the rubber composition of the present invention, an anti-vibration rubber which is excellent in both durability and damping properties can be provided. Thus, when such an anti-vibration rubber is used for constituent members such as a torsional damper, engine mount and muffler hanger, the vibration at the time of engine driving or the like can be sufficiently absorbed for an extended period of time.

### Mode for carrying out the Invention

Hereinafter, the present invention will be described in detail. As described above, the anti-vibration rubber composition of the present invention comprises the rubber component comprising a natural rubber, and antioxidants. As the antioxidants, both a compound having a carbon-carbon double bond at a terminal and a carbonyl group at an α position thereof and an imidazole antioxidant are used.

The natural rubber is not limited and may be a common natural rubber used for anti-vibration rubbers. Specific examples include all grades of sheet rubbers (including crepes) such as RSS (Ribbed Smoked Sheet), White Crepes, Pale Crepes, Estate Brown Crepes, Comp Crepes, Thin Brown Crapes (Rimills), Thich Blancket Crapes (Ambers), Flat Bark Crepes, Pure Smoked Blanket Crapes, and block rubbers such as SMR (Standard Malaysian Rubber), SIR (Indonesian), STR (Thai), SSR (Singaporean), SCR (Ceylon), and SVR (Vietnamese). These may be used singly, or two or more may be used in combination.

The rubber component may comprise a diene-based synthetic rubber. For example, isoprene rubber (IR), butadiene rubber (BR), styrene-butadiene rubber (SBR) and acrylonitrile-butadiene rubber (NBR) may be used as the diene-based synthetic rubber. These may be used singly or two or more may be used in mixture. Of these, butadiene rubber (BR) and styrene-butadiene rubber (SBR) are preferable, and further, styrene-butadiene rubber (SBR) is particularly preferable.

When a diene-based synthetic rubber is contained in the rubber component, the mass ratio of the natural rubber to the diene-based synthetic rubber (natural rubber/diene-based synthetic rubber) is 99/1 to 50/50, preferably 99/1 to 60/40, and further preferably 99/1 to 80/20. Within this range, high durability distinctive to natural rubbers is imparted to the anti-vibration rubber while further enhancement effects on the damping properties rendered by the diene-based synthetic rubber is achieved.

The anti-vibration rubber composition of the present invention comprises, as the antioxidants, both a compound having a carbon-carbon double bond at a terminal and a carbonyl group at an α position thereof (hereinafter also referred to as "antioxidant A") and an imidazole antioxidant (hereinafter also referred to as "antioxidant B".

The compound represented by the following general formula (I) is used as the compound having a carbon-carbon double bond at a terminal and a carbonyl group at an α position thereof. 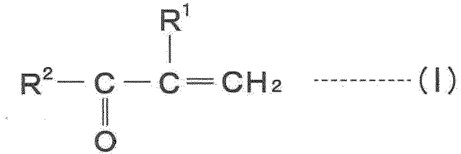 wherein,
R¹ is a hydrogen atom or a methyl group, preferably is a methyl group,

In the above general formula (I),
R² is a group represented by R⁴-R³-,
R³ is selected from the group consisting of a single bond, substituted or unsubstituted alkylene groups having 1 to 5 carbon atoms, and preferably 2 to 3 carbon atoms, and substituted or unsubstituted oxyalkylene groups having 1 to 5 carbon atoms, preferably 2 to 3 carbon atoms, in which an oxygen atom of the oxyalkylene group binds to a carbon atom of the carbonyl group), and
R⁴ is selected from the group consisting of diphenylamino group, 1-naphthylamino group, 2-naphthylamino group, anilino group, ditolylamino group and p-(phenylamino)anilino group.

In the above R⁴-R³-, further preferably, R³ is a single bond or a 2-hydroxyoxypropylene group, and R⁴ is a p-(phenylamino)anilino group.

For the antioxidant A, a p-phenylenediamine compound specifically such as N-phenyl-N'-(3-methacryloyloxy-2-hydroxypropyl)-p-phenylenediamine represented by the following general formula (II) or N-(4-anilinophenyl)methacrylamide represented by the following general formula (III) is particularly preferably used.

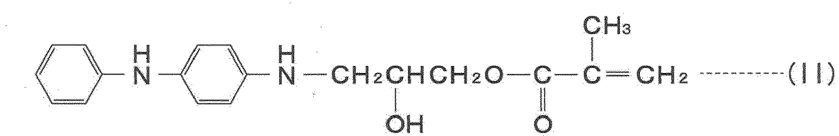

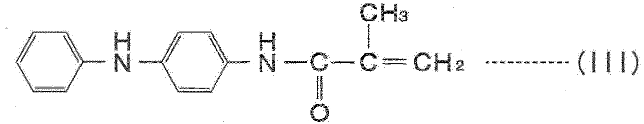

The content of the compound having a carbon-carbon double bond at a terminal and a carbonyl group at an α position thereof (antioxidant A) in the anti-vibration rubber composition according to the present invention is 0.2 to 13 parts by mass, preferably 0.5 to 13 parts by mass, particularly preferably 0.5 to 8 parts by mass, further preferably 0.5 to 2 parts by mass, and particularly 1 to 2 parts by mass, based on 100 parts by mass of the rubber component. Within this range, the anti-vibration rubber with sufficient damping properties and durability can be obtained.

As the imidazole antioxidant (antioxidant B), 2-mercaptobenzimidazole or a salt thereof (e.g., zinc salt), 2-mercaptomethylbenzimidazole or a salt thereof (e.g., zinc salt), or the like, may be used. These may be used singly, or two or more may be used in combination. Of these, 2-mercaptobenzimidazole is particularly preferable.

The content of the imidazole antioxidant in the anti-vibration rubber composition according to the present invention is 0.1 to 10 parts by mass, preferably 1 to 10 parts by mass, and particularly preferably 1 to 5 parts by mass, based on 100 parts by mass of the rubber component. Within this range, a high level of the damping properties of the anti-vibration rubber can be assured by the synergistic effect with the antioxidant A.

In addition to the above antioxidants A and B, the anti-vibration rubber composition of the present invention comprises sulfur and carbon black, and optionally comprises common additives used in the rubber industry such as a vulcanization accelerator, vulcanization accelerator auxiliary, wax and oil.

Sulfur is used as a vulcanizing agent. The total amount of sulfur added is generally 0.1 to 5 parts by mass based on 100 parts by mass of the rubber component.

Examples of the vulcanization accelerator for promoting the vulcanization include benzothiazole-based vulcanization accelerators such as 2-mercaptobenzothiazole, dibenzothiazyl disulfide, N-cyclohexyl-2-benzothiazyl sulfenamide, N-t-butyl-2-benzothiazyl sulfenamide and N-t-butyl-2-benzothiazyl sulfenamide; guanidine-based vulcanization accelerators such as diphenyl guanidine; thiuram-based vulcanization accelerators such as tetramethyl thiuram disulfide, tetrabutyl thiuram disulfide, tetradodecyl thiuram disulfide, tetraoctyl thiuram disulfide, and tetrabenzyl thiuram disulfide; dithiocarbamate compounds such as dimethyl dithiocarbamate zinc; and other dialkyl dithiophosphoric acid zinc.

The above vulcanization accelerators such as sulfenamide compounds, thiuram compounds, thiazol compounds, guanidine compounds, and dithiocarbamate compounds may be used singly, or two or more may be used in combination. For adjusting the vulcanization behavior (rate), preferably employed combinations of vulcanization accelerators are a thiuram compound and/or a thiazol compound, which have a comparatively high vulcanization accelerating ability, and a guanidine compound and/or a sulfenamide compound, which have a comparatively moderate to low vulcanization accelerating ability. Specific examples of the combination include tetramethyl thiuram disulfide and N-cyclohexyl-2-benzothiazyl sulfenamide combination, tetrabutyl thiuram disulfide and N-t-butyl-2-benzothiazyl sulfenamide combination, and dibenzothiazyl disulfide and diphenyl guanidine combination. The total amount of the vulcanization accelerator added is preferably 0.2 to 10 parts by mass based on 100 parts by mass of the rubber component.

In the present invention, from a viewpoint of further promoting the vulcanization, a vulcanization accelerator auxiliary such as zinc oxide (ZnO) and a fatty acid may be added. The fatty acid may be any of saturated or unsaturated, or linear or branched fatty acid. The number of carbon atoms of the fatty acid is also not particularly limited, but is for example 1 to 30, and preferably 15 to 30, and more specific examples of the fatty acid include cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. These may be used singly, or two or more may be used in combination.

In the present invention, zinc oxide and stearic acids may be preferably used. The amount of these vulcanization accelerator auxiliaries added is preferably 1 to 10 parts by mass, and more preferably 2 to 7 parts by mass, based on 100 parts by mass of the above rubber component. When an amount added exceeds 10 parts by mass, deteriorated workability and dynamic magnification may be caused. When an amount added is below 1 part by mass, vulcanization retardant, or the like, may be caused.

The oil usable may be any of the known oils without limitations, and specifically include processed oils such as aromatic oils, naphthenic oils and paraffin oils, vegetable oils such as coconut oil, synthetic oils such as alkylbenzene oils and castor oils. In the present invention, paraffin oils may be preferably used. These oils may be used singly, or two or more may be used in combination. The amount of these oils added is not limited but may be about 1 to 40 parts by mass based on 100 parts by mass of the above rubber component. When an amount added deviates from the above range, kneading workability may be deteriorated. When an oil-extended rubber is used in the above rubber component, the total amount of the oil contained in the rubber and the oil to be separately added at the time of mixing may be adjusted to be within the above range.

Carbon black is used as the filler. The carbon black is FEF in the present invention. This carbon black may be used singly, or two or more may be used in mixture. The amount of these carbon blacks added is typically 15 to 60 parts by mass, and preferably 20 to 50 parts by mass, based on 100 parts by mass of the above rubber component. When an amount added exceeds 60 parts by mass, workability may be affected. When an amount added is below 15 parts by mass, poorer adhesiveness may be caused.

The anti-vibration rubber composition of the present invention may further comprise, as appropriate, additives such as an antioxidant, blowing agent, plasticizer, lubricant, tackifier, petroleum resin, ultraviolet absorber, dispersant, compatibilizer and/or homogenizer.

For obtaining the rubber composition of the present invention, the method for adding each of the above components is not limited and all the component materials may be added and kneaded at once or may be added and kneaded in 2 or 3 divided steps. For kneading, a kneader such as roll kneader, internal mixer or Bunbury rotor may be used. Further, for molding the rubber composition into sheet or strip shape, a known molding machine such as extrusion molding machine or press molding machine may be used.

The vulcanization conditions for hardening the above rubber composition are not limited, but typically the vulcanization conditions of 140 to 180°C and 5 to 120 minutes are employed.

The anti-vibration rubber of the present invention is obtained by vulcanizing the rubber composition described above, and is preferably used for high-temperature parts such as a torsional damper, engine mount and muffler hanger of an automobile, but not limited thereto.

### Examples

The materials shown in the following Table were kneaded in the shown formulation and vulcanized, and thus each of the anti-vibration rubber compositions of Examples and Comparative Examples was hardened by vulcanization to produce a sheet-molded product having a size of a 120 mm length x a 120 mm width x a 2 mm thickness. The thus obtained sheet was used as the evaluation sample of the anti-vibration rubbers.

Details of the materials used are as follows.
* Natural rubber (RSS #4)
* Styrene-butadiene rubber: SBR (JSR Corporation, "1500")
* Carbon black (Asahi Carbon Co., Ltd., "Asahi #65", FEF carbon)
* Stearic acid (New Japan Chemical Co., Ltd. "Stearic acid 50S")
* Zinc oxide (Hakusuitech Co., Ltd. "#3 Zinc oxide")
* Wax (Seiko Chemical Co., Ltd., "Suntight S")
* Antioxidant A1 (Ouchi Shinko Chemical Industrial Co., Ltd., "Nocrac G1", N-phenyl-N'-(3-methacryloyloxy-2-hydroxypropyl)-p-phenylenediamine)
* Antioxidant A2 (Seiko Chemical Co., Ltd., "APMA", N-(4-anilinophenyl)methacrylamide)
* Antioxidant B (Ouchi Shinko Chemical Industrial Co., Ltd., "Nocrac MB", 2-mercaptobenzimidazole)
* Antioxidant C (Ouchi Shinko Chemical Industrial Co., Ltd., "Nocrac 6C", N-phenyl-N'-(1,3-dimethylbutyl)-p-phenylenediamine)
* Naphthene oil (SUNREFINING AND MARKETING, "SUNTHENE 4240")
* Sulfur (Tsurumi Chemical Industry Co., Ltd., "Powder sulfur")
* Vulcanization accelerator (Ouchi Shinko Chemical Industrial Co., Ltd., "Nocceler CZ-G", N-cyclohexyl-2-benzothiazolyl sulfenamide)

### <Evaluation Method>

The evaluation samples of the anti-vibration rubbers produced above were subjected to the following evaluation tests. The results are shown in the following Tables.
(1) Hardness Hd (-)
   Measured in accordance with JIS K 6253 (Type A).
(2) Elongation at break Eb (%)
   Measured in accordance with JIS K 6251
(3) Tensile at break Tb (MPa)
   Measured in accordance with JIS K 6251
(4) Elongation at break after fatigue loading (times)
   An elongation of 0 to 200% was repeated at 35°C, and the number of times at which the rubber broke was defined as the number of counts.
(5) tan δ (-): Loss factor
   Measured in accordance with JIS K 6385 (frequency 15 Hz, distortion 0.2%)

**[Table 1]**

| | | Example 1 | Example 2 | Example 3 | Example 4 | Example 5 | Example 6 | Example 7 | Example 8 | Example 9 |
|---|---|---|---|---|---|---|---|---|---|---|
| Formulation (part by mass) | Natural rubber | 100 | 100 | 100 | 100 | 80 | 100 | 100 | 100 | 100 |
| | SBR | - | - | - | - | 20 | - | - | - | - |
| | FEF Carbon | 40 | 40 | 40 | 40 | 40 | 40 | 40 | 40 | 40 |
| | Stearic acid | 2 | 2 | 2 | 2 | 2 | 2 | 2 | 2 | 2 |
| | Zinc oxide | 5 | 5 | 5 | 5 | 5 | 5 | 5 | 5 | 5 |
| | Wax | 3 | 3 | 3 | 3 | 3 | 3 | 3 | 3 | 3 |
| | Antioxidant C (6C) | - | - | - | - | - | - | - | - | - |
| | Antioxidant A1 (G1) | 1 | - | 2 | 2 | 2 | 2 | 2 | 8 | 13 |
| | Antioxidant A2 (APMA) | - | 2 | - | - | - | - | - | - | - |
| | Antioxidant B (MB) | 1 | 1 | 0.1 | 1 | 1 | 5 | 10 | 10 | 1 |
| | Naphthenic oil | 2 | 2 | 2 | 2 | 2 | 2 | 2 | 2 | 2 |
| | Sulfur | 1 | 1 | 1 | 1 | 1 | 1 | 1 | 1 | 1 |
| | Vulcanization accelerator C2 | 2 | 2 | 2 | 2 | 2 | 2 | 2 | 2 | 2 |
| Evaluation | Hardness Hd (-) | 55 | 52 | 55 | 55 | 55 | 55 | 53 | 51 | 48 |
| | Elongation at break Eb (%) | 590 | 650 | 570 | 620 | 550 | 620 | 650 | 680 | 720 |
| | Tension at break Tb (MPa) | 22.9 | 24.3 | 23.8 | 22.6 | 21.8 | 22.6 | 21.8 | 20.6 | 17.5 |
| | Elongation at break after fatigue loading (times) | 5488 | 6256 | 5621 | 6846 | 5415 | 7542 | 7955 | 8545 | 8153 |
| | tan δ(-) | 0.186 | 0.187 | 0.188 | 0.201 | 0.221 | 0.243 | 0.254 | 0.268 | 0.254 |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Formulation (part by mass) | Natural rubber | 100 | 100 | 20 | 100 | 100 | 100 | 100 | 100 | 100 |
| | SBR | - | - | 80 | - | - | - | - | - | - |
| | FEF Carbon | 40 | 50 | 40 | 40 | 40 | 40 | 40 | 40 | 40 |
| | Stearic acid | 2 | 2 | 2 | 2 | 2 | 2 | 2 | 2 | 2 |
| | Zinc oxide | 5 | 5 | 5 | 5 | 5 | 5 | 5 | 5 | 5 |
| | Wax | 3 | 3 | 3 | 3 | 3 | 3 | 3 | 3 | 3 |
| | Antioxidant C (6C) | - | - | - | 2 | 2 | - | - | - | - |
| | Antioxidant A1 (G1) | - | - | - | - | - | 0.2 | 0.5 | 1 | 2 |
| | Antioxidant A2 (APMA) | - | - | - | - | - | - | - | - | - |
| | Antioxidant B (MB) | - | - | - | - | 1 | - | - | - | - |
| | Naphthenic oil | 2 | 2 | 2 | 2 | 2 | 2 | 2 | 2 | 2 |
| | Sulfur | 1 | 1 | 1 | 1 | 1 | 1 | 1 | 1 | 1 |
| | Vulcanization accelerator C2 | 2 | 2 | 2 | 2 | 2 | 2 | 2 | 2 | 2 |
| Evaluation | Hardness Hd (-) | 55 | 61 | 56 | 54 | 55 | 55 | 55 | 55 | 54 |
| | Elongation at break Eb (%) | 550 | 500 | 480 | 580 | 590 | 560 | 560 | 580 | 600 |
| | Tension at break Tb (MPa) | 23.4 | 22.1 | 16.1 | 24.6 | 22.9 | 23.3 | 23.2 | 22.8 | 22.9 |
| | Elongation at break after fatigue loading (times) | 2929 | 1751 | 732 | 5940 | 6600 | 3212 | 4048 | 4853 | 5310 |
| | tan δ(-) | 0.131 | 0.168 | 0.183 | 0.132 | 0.137 | 0.135 | 0.142 | 0.160 | 0.184 |

**[Table 3]**

| | | Comparative Example 10 | Comparative Example 11 | Comparative Example 12 | Comparative Example 13 | Comparative Example 14 | Comparative Example 15 |
|---|---|---|---|---|---|---|---|
| Formulation (part by mass) | Natural rubber | 60 | 20 | 100 | 100 | 100 | 100 |
| | SBR | 40 | 80 | - | - | - | - |
| | FEF Carbon | 40 | 40 | 40 | 40 | 40 | 40 |
| | Stearic acid | 2 | 2 | 2 | 2 | 2 | 2 |
| | Zinc oxide | 5 | 5 | 5 | 5 | 5 | 5 |
| | Wax | 3 | 3 | 3 | 3 | 3 | 3 |
| | Antioxidant C (6C) | - | - | - | - | - | - |
| | Antioxidant A1 (G1) | 2 | 2 | 8 | 13 | - | - |
| | Antioxidant A2 (APMA) | - | - | - | - | 2 | - |
| | Antioxidant B (MB) | - | - | - | - | - | 1 |
| | Naphthenic oil | 2 | 2 | 2 | 2 | 2 | 2 |
| | Sulfur | 1 | 1 | 1 | 1 | 1 | 1 |
| | Vulcanization accelerator C2 | 2 | 2 | 2 | 2 | 2 | 2 |
| Evaluation | Hardness Hd (-) | 54 | 55 | 52 | 49 | 53 | 57 |
| | Elongation at break Eb (%) | 540 | 520 | 660 | 700 | 620 | 530 |
| | Tension at break Tb (MPa) | 20.5 | 15.4 | 21.2 | 19.8 | 23.4 | 24.1 |
| | Elongation at break after fatigue loading (times) | 4023 | 1124 | 6008 | 6600 | 5661 | 3483 |
| | tan δ(-) | 0.152 | 0.245 | 0.235 | 0.231 | 0.179 | 0.138 |

### <Evaluation Results>

The anti-vibration rubbers produced from the anti-vibration rubber compositions containing both the antioxidant A (A1 or A2) and the antioxidant B were good all in hardness, tensile at break, elongation at break, elongation at break after fatigue loading and tan δ.

On the other hand, when the antioxidant C is used singly, tan δ was revealed to have been reduced (Comparative Example 4). When the antioxidant B and the antioxidant C were used together, tan δ was revealed to have been reduced (Comparative Example 5). When the antioxidant A was used singly, the elongation at break after fatigue loading was insufficient (Comparative Examples 6 to 11 and 14). For enhancing the elongation at break after fatigue loading and tan δ by the single use of antioxidant A, a large amount of the antioxidant A had to be added as a result (Comparative Examples 12 and 13). When the antioxidant B was used singly, the elongation at break after fatigue loading and tan δ were insufficient (Comparative Example 15).

### <Evaluation Results>

The anti-vibration rubbers produced from the anti-vibration rubber compositions containing both the antioxidant A (A1 or A2) and the antioxidant B were good all in hardness, tensile at break, elongation at break, elongation at break after fatigue loading and tan δ.

On the other hand, when the antioxidant C is used singly, tan δ was revealed to have been reduced (Comparative Example 4). When the antioxidant B and the antioxidant C were used together, tan δ was revealed to have been reduced (Comparative Example 5). When the antioxidant A was used singly, the elongation at break after fatigue loading was insufficient (Comparative Examples 6 to 11 and 14). For enhancing the elongation at break after fatigue loading and tan δ by the single use of antioxidant A, a large amount of the antioxidant A had to be added as a result (Comparative Examples 12 and 13). When the antioxidant B was used singly, the elongation at break after fatigue loading and tan δ were insufficient (Comparative Example 15).

## Claims

1. An anti-vibration rubber composition comprising: a rubber component comprising a natural rubber, and antioxidants, carbon black and sulfur, wherein the anti-vibration rubber composition comprises:
a compound having a carbon-carbon double bond at a terminal and a carbonyl group at an α position thereof and an imidazole antioxidant as the antioxidants, wherein the compound having a carbon-carbon double bond at a terminal and a carbonyl group at an α position thereof is a compound represented by the following general formula (I) 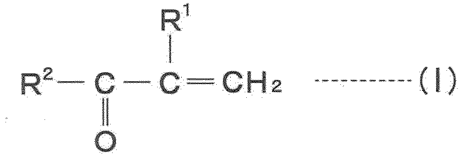 wherein,
R¹ is a hydrogen atom or a methyl group,
R² is a group represented by R⁴-R³-, wherein R³ is selected from the group consisting of a single bond, substituted or unsubstituted alkylene groups having 1 to 5 carbon atoms, and substituted or unsubstituted oxyalkylene groups having 1 to 5 carbon atoms in which an oxygen atom of the oxyalkylene group binds to the carbon atom of the carbonyl group, and
R⁴ is selected from the group consisting of diphenylamino group, 1-naphthylamino group, 2-naphthylamino group, anilino group, ditolylamino group and p-(phenylamino)anilino group, wherein the content of the compound having a double bond at a terminal and a carbonyl group at an α position thereof is 0.2 to 13 parts by mass based on 100 parts by mass of the rubber component, the content of the imidazole antioxidant is 0.1 to 10 parts by mass based on 100 parts by mass of the rubber component,
wherein the carbon black is FEF.

2. The anti-vibration rubber composition according to claim 1, wherein the imidazole antioxidant is selected from the group consisting of 2-mercaptobenzimidazole or a salt thereof and 2-mercaptomethylbenzimidazole or a salt thereof.

3. The anti-vibration rubber composition according to any one of claims 1 or 2, wherein the rubber component further comprises a diene-based synthetic rubber, and a mass ratio of the natural rubber to the diene-based synthetic rubber is 99/1 to 50/50.

4. An anti-vibration rubber obtained by using the anti-vibration rubber composition according to any one of claims 1 to 3.

## Patentansprüche

1. Schwingungsdämpfende Kautschukzusammensetzung umfassend: eine Kautschukkomponente, die einen Naturkautschuk und Antioxidationsmittel, Ruß und Schwefel umfasst, wobei die schwingungsdämpfende Kautschukzusammensetzung Folgendes umfasst:
eine Verbindung, die eine Kohlenstoff-Kohlenstoff-Doppelbindung an einem Terminal und eine Carbonylgruppe an einer α-Position davon und ein Imidazolantoxidationsmittel als Antioxidationsmittel aufweist, wobei die Verbindung, die eine Kohlenstoff-Kohlenstoff-Doppelbindung an einem Terminal und eine Carbonylgruppe an einer α-Position davon aufweist, eine Verbindung ist, die durch die folgende allgemeine Formel (I) dargestellt ist 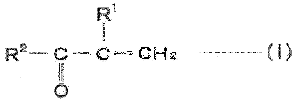 wobei
R¹ ein Wasserstoffatom oder eine Methylgruppe ist,
R² eine Gruppe ist, die durch R⁴ -R³- dargestellt ist, wobei
R³ aus der Gruppe ausgewählt ist bestehend aus einer Einfachbindung, substituierten oder unsubstituierten Alkylengruppen, die 1 bis 5 Kohlenstoffatome aufweisen, und substituierten oder unsubstituierten Oxyalkylengruppen, die 1 bis 5 Kohlenstoffatome aufweisen, wobei ein Sauerstoffatom der Oxyalkylengruppe sich an das Kohlenstoffatom der Carbonylgruppe bildet und
R⁴ aus der Gruppe ausgewählt ist bestehend aus der Diphenylaminogruppe, 1-Naphthylaminogruppe, 2-Naphthylaminogruppe, Anilingruppe, Ditolylaminogruppe und p-(Phenylamino)anilingruppe, wobei der Gehalt der Verbindung, die eine Doppelbindung an einem Terminal und eine Carbonylgruppe an einer α-Position davon aufweist, 0,2 bis 13 Masseteile, auf 100 Masseteile der Kautschukkomponente bezogen, beträgt, der Gehalt des Imidazolantioxidationsmittels 0,1 bis 10 Masseteile, auf 100 Masseteile der Kautschukkomponente bezogen, beträgt,
wobei der Ruß FEF ist.

2. Schwingungsdämpfende Kautschukzusammensetzung nach Anspruch 1, wobei das Imidazolantioxidationsmittel aus der Gruppe ausgewählt ist bestehend aus 2-Mercaptobenzimidazol oder einem Salz davon und 2-Mercaptomethylbenzimidazol oder einem Salz davon.

3. Schwingungsdämpfende Kautschukzusammensetzung nach einem der Ansprüche 1 oder 2, wobei die Kautschukkomponente ferner einen Synthesekautschuk auf der Basis von Dien umfasst und ein Masseverhältnis des Naturkautschuks zum Synthesekautschuk auf der Basis von Dien 99/1 bis 50/50 beträgt.

4. Schwingungsdämpfender Kautschuk, der durch Verwenden der schwingungsdämpfenden Kautschukzusammensetzung nach einem der Ansprüche 1 bis 3 erhalten wird.

## Revendications

1. Composition de caoutchouc anti-vibration comprenant: un composant de caoutchouc comprenant un caoutchouc d'origine naturelle, et des antioxydants, du noir de carbone et du soufre, la composition de caoutchouc anti-vibration comprenant:
un composé ayant une double liaison carbone-carbone à une terminaison et un groupe carbonyle à sa position α et un antioxydant imidazole comme antioxydant, où le composé ayant une double liaison carbone-carbone à une terminaison et un groupe carbonyle à sa position α est un composé représenté par la formule générale suivante (I) 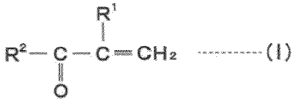 où,
R¹ est un atome d'hydrogène ou un groupe méthyle,
R² est un groupe représenté par R⁴-R³-, où
R³ est sélectionné dans le groupe constitué d'une liaison unique, des groupes alcylène substitués ou non substitués ayant de 1 à 5 atomes de carbone, et des groupes oxyalcylène substitués ou non substitués ayant de 1 à 5 atomes de carbone dans lesquels un atome d'oxygène du groupe oxyalcylène se lie à l'atome de carbone du groupe carbonyle, et
R⁴ est sélectionné dans le groupe constitué du groupe diphénylamino, du groupe 1-naphtylamino, du groupe 2-naphtylamino, du groupe anilino, du groupe ditolylamino et du groupe *p*-(phénylamino)anilino, où la teneur du composé ayant une double liaison à une terminaison et un groupe carbonyle à sa position α est de 0,2 à 13 parties en masse sur la base de 100 parties en masse du composant de caoutchouc, la teneur de l'antioxydant imidazole est de 0,1 à 10 parties en masse sur la base de 100 parties en masse du composant de caoutchouc,
le noir de carbone étant le FEF.

2. Composition de caoutchouc anti-vibration selon la revendication 1, dans laquelle l'antioxydant imidazole est sélectionné dans le groupe constitué du 2-mercaptobenzimidazole ou son sel et du 2-mercaptométhylbenzimidazole ou son sel.

3. Composition de caoutchouc anti-vibration selon l'une quelconque des revendications 1 ou 2, le composant de caoutchouc comprenant en outre un caoutchouc synthétique à base de diène, et un rapport en masse du caoutchouc d'origine naturelle au caoutchouc synthétique à base de diène étant de 99/1 à 50/50.

4. Caoutchouc anti-vibration obtenu en utilisant la composition de caoutchouc anti-vibration selon l'une quelconque des revendications 1 à 3.
